# EUROPÄISCHE PATENTSCHRIFT

(11) **EP 3 980 850 B1**
(45) Veröffentlichungstag und Bekanntmachung des Hinweises auf die Patenterteilung: **10.09.2025**
(21) Anmeldenummer: 20730251.4
(22) Anmeldetag: 02.06.2020
(51) Int. Cl.: G05B 13/02, G05B 13/04, H04L 12/40

(54) **AKTIVE DATENGENERIERUNG UNTER BERÜCKSICHTIGUNG VON UNSICHERHEITEN**
ACTIVE DATA GENERATION TAKING UNCERTAINTIES INTO CONSIDERATION
GÉNÉRATION DE DONNÉES ACTIVES EN TENANT COMPTE DES INCERTITUDES

(30) Priorität: 04.06.2019 DE 102019208121
(43) Veröffentlichungstag der Anmeldung: 13.04.2022
(73) Patentinhaber: Continental Automotive Technologies GmbH, 30175 Hannover (DE)
(72) Erfinder: WIRTH, Christian, 90411 Nürnberg (DE)
(74) Vertreter: Aumovio Corporation
(86) Internationale Anmeldenummer: PCT/EP2020/065219
(87) Internationale Veröffentlichungsnummer: WO 2020/245117

(56) Entgegenhaltungen:
- US-A1- 2001 025 232
- ZHANG-WEI HONG ET AL: "Adversarial Active Exploration for Inverse Dynamics Model Learning", ARXIV.ORG, CORNELL UNIVERSITY LIBRARY, 201 OLIN LIBRARY CORNELL UNIVERSITY ITHACA, NY 14853, 26 June 2018 (2018-06-26), XP081622540
- WILSON ZACHARY T ET AL: "The ALAMO approach to machine learning", COMPUTERS & CHEMICAL ENGINEERING, vol. 106, 31 December 2017 (2017-12-31), pages 785 - 795, XP085239273, ISSN: 0098-1354, DOI: 10.1016/J.COMPCHEMENG.2017.02.010

## Beschreibung

Die vorliegende Erfindung betrifft ein Verfahren zum Trainieren eines Prädiktors, ein Computerprogramm, ein Datenträger und ein Inspektionsgerät. Ein Prädiktor aus dem Bereich des maschinellen Lernens ist eine Approximation einer multi-dimensionalen Funktion.

Die Bestimmung welche Datenpunkte aus dem gesamten Datenraum für ein KI (Künstliche Intelligenz) Verfahren gesammelt, generiert und genutzt werden sollen, unterliegt normalerweise einer durch Menschen getroffenen Auswahl, festen Richtlinien oder dem Zufall.

Verfahren der aktiven Datengenerierung sind zum Beispiel nötig, um ein "kooperatives Lernen" mit Domain-Experten zu ermöglichen, um den (menschlichen) Experten bei iterativen Kalibrierungs- oder Parametrisierungsaufgaben zu unterstützen. In solchen Szenarien ist es Aufgabe des Experten manuell Datenpunkte (z.B. Systemparameter) zu selektieren und zu evaluieren, um ein gegebenes Optimierungsziel zu erreichen. Verfahren der aktiven Datengenerierung sind allerdings auch bei einer voll automatisierten Datensammlung nötig.

Verfahren des "Active Learnings" erlauben es zu bestimmen, welche Datenpunkte mit Zielwerten (z.B. Klassen, Positionen oder KPIs (Key Performance Indicators)) annotiert werden sollen, und basieren auf einer bereits vorhandenen Menge von (unannotierten) Daten. In dem Artikel "Counterexample-Guided Data Augmentation" von Tommaso Dreossi, Shromona Ghosh, Xiangyu Yue, Kurt Keutzer, Alberto Sangiovanni-Vincentelli und Sanjit A. Seshia, erschienen in den Proceedings of the Twenty-Seventh International Joint Conference on Artificial Intelligence auf den Seiten 2071-2078 im Juli 2018 (https://doi.org/10.24963/ijcai.2018/286) ist ein alternatives Verfahren beschreiben, das zudem gezielt bestimmen kann, welche Datenpunkte generiert werden sollen. Zudem ist in dem Artikel "A Theory of Formal Synthesis via Inductive Learning" von S. Jha und S.A: Seshia, erschienen in Acta Informatica (2017) 54, auf Seite 693 (https://doi.org/10.1007/s00236-017-0294-5) ein formales Rahmenkonzept beschrieben, welches eine ganze Klasse von Konzepten abdeckt, ohne auf mögliche Realisierungen einzugehen.

Zhang-Wei Hong et al. beschreiben in "Adversarial Active Exploration for Inverse Dynamics Model Learning" ARXIV ORG. CORNELL UNIVERSITY LIBRARY, 26.06.2018, XP081622540, ein Lernschema, das ohne menschliche Interaktion auskommt, bei dem Trainingsdaten abgetastet werden. Dazu werden ein Deep Reinforcement Learning Agent und ein Inverse Dynamics Modell verwendet, die gegeneinander antreten. Der Agent sammelt Trainings-Beispiele für das Modell mit dem Ziel, dass der Fehler des Modells maximiert wird. Das Modell wird mit den Beispielen des Agenten trainiert und generiert eine Belohnung für den Agenten, wenn es dem Modell nicht gelingt, die Aktion zu prädizieren, die der Agent ausführt. Die Auswahl der Trainingsdaten beeinflusst die Genauigkeit des Lernens und die Lerngeschwindigkeit.

Zachary T. Wilson et al. beschreiben in "The ALAMO approach to machine learning", Computers & Chemical Engineering, Bd. 106, p. 785-795, XP085239273, ISSN: 0098-1354, DOI: 10.1016/J.COMPCHEMENG.2017.02.010, eine rechnergestütze Methode, um algebraische Funktionen aus Daten zu lernen. Es wird ein lineares Modell von geringer Komplexität gebildet, das aus explizit nichtlinearen Transformationen unabhängiger Variablen zusammengesetzt ist. Mittels adaptiven Sampling kann der Trainingsdatensatz aktualisiert werden.

US 2001025232 A1 zeigt eine hybride linear-neuronale Netzwerk-Prozesssteuerung, die aus Eingangsdaten mit einem primären Modell und einem Fehlerkorrekturmodell verbesserte Ausgabedaten erzeugt.

Die Datengenerierung und -sammlung ist zeitaufwendig, kostspielig und einseitig, weswegen es nicht ausreicht, den Annotationsprozess zu verbessern.

Im Stand der Technik ist ein Verfahren zur Generierung von Daten bekannt, das den Vorhersagefehler eines Prädiktors maximiert, um anhand einer Datenbeschreibung der Daten mit maximalem Vorhersagefehler neue Daten zu generieren.

Nach Stand der Technik ist die Auswahl der zu generierenden Datenpunkten Aufgabe eines Experten. Es existieren erste, automatisierte Verfahren zur Selektion von zu generierenden Datenpunkten, diese berücksichtigen aber nur welche Datenpunkte (potentiell) für ein KI-Verfahren schwierig vorherzusagen sind, ohne die Zuverlässigkeit der Vorhersage mit ein zu beziehen. Daher kann keine zureichende Abdeckung des gewünschten oder benötigten Datenraums gewährleistet werden. Zudem sind diese bekannten Verfahren nur auf 0/1 Fehler anwendbar. Solche 0/1 Fehler geben keinen Fehlergrad an, sondern unterscheiden nur zwischen Fehler (=1) und kein Fehler (=0).

Auch besonders um die manuelle Arbeit des Experten zu minimieren ist es daher von großer Wichtigkeit, dass die Datengenerierung minimiert wird. Zudem können gut gewählte Trainingsdaten die Zuverlässigkeit der Vorhersage und damit die Qualität des KI-Verfahrens steigern. Durch die Nutzung eines kontinuierlichen Fehlermaßes kann außerdem eine Verbesserung der Abschätzung der Qualität bzw. des Fehlers des KI-Verfahrens erzielt werden. Damit kann eine aktive, geführte Datengenerierung genutzt werden, welche sowohl das Optimierungsziel als auch die Abdeckung des Datenraums berücksichtigt.

Ein erfindungsgemäßes Verfahren weist daher unter anderem die Schritte Trainieren eines ersten Prädiktors auf Basis der bereits vorhandenen Daten, Bestimmen eines Vorhersagefehler des ersten Prädiktors für jeden Datenpunkt, Trainieren eines zweiten Prädiktors, um einen erwarteten Vorhersagefehler des ersten Prädiktors und eine Unsicherheit zu bestimmen, Bestimmen einer Datenbeschreibung, die eine Kombination aus erwartetem Vorhersagefehler und Unsicherheit maximiert und Generieren von Daten auf Grund der zuvor bestimmten Datenbeschreibung auf.

Indem gezielt Datenpunkte generiert werden, welche besonders relevant für die Problemstellung sind und zudem eine ausreichende Abdeckung des Datenraums gewährleisten, kann die Anzahl an benötigten Daten reduziert werden.

Die Nutzung eines zweiten Prädiktors erlaubt es, das Verfahren auch für Fälle anzuwenden, in denen der erste Prädiktor nicht invertierbar ist oder der Eingaberaum des Prädiktors nicht zur Datengeneration genutzt werden kann.

Das erfindungsgemäße Verfahren dient dem Trainieren eines Prädiktors mit durch das voran genannte Verfahren generierten Daten und weist weiterhin die Schritte Überprüfen, ob eine vorher bestimmte Qualität des ersten Prädiktors erreicht ist und Annotieren und hinzufügen der neuen Daten zu den bereits vorhandenen Daten auf.

Ein erfindungsgemäßes Computerprogramm umfasst Befehle, die bewirken, dass ein Rechnersystem eines der voran genannten Verfahren ausführt. Dies hat den Vorteil, dass sich die Verfahren besonders schnell und effizient anwenden lassen.

Auf einem erfindungsgemäßen Datenträger kann das vorgenannte Computerprogramm gespeichert werden. Dies hat den Vorteil, dass das Computerprogramm leicht transportiert und vervielfältigt werden kann.

Weitere Merkmale der vorliegenden Erfindung werden aus der nachfolgenden Beschreibung und den angehängten Ansprüchen in Verbindung mit den Figuren ersichtlich.

### Figurenübersicht

- Fig. 1: zeigt ein Ablaufdiagramm eines Verfahrens zum Generieren von Daten nach dem Stand der Technik;
- Fig. 2: zeigt ein Ablaufdiagramm eines erfindungsgemäßen Verfahrens zum Generieren von Daten;
- Fig. 3: zeigt ein Ablaufdiagramm eines Verfahrens zum Trainieren eines Prädiktors, das ein erfindungsgemäßes Verfahren zum Generieren von Daten umfasst;
- Fig. 4: zeigt schematisch ein Inspektionsgerät;
- Fig. 5: zeigt eine schematische Darstellung eines Fahrzeugs; und
- Fig. 6: zeigt einen eine schematische Darstellung eines erfindungsgemäßen Datenträgers.

### Figurenbeschreibung

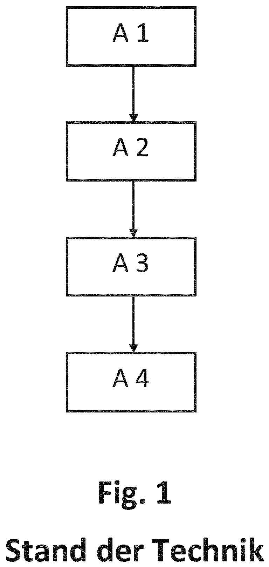

In Figur 1 ist ein Verfahren nach dem Stand der Technik zum Generieren von Daten, die zum Beispiel für das Trainieren eines Prädiktors geeignet sind, dargestellt. Dabei wird in Schritt A1 ein Prädiktor auf Basis von bereits annotierten Daten trainiert und in Schritt A2 ein Vorhersagefehler für die Daten bestimmt. In Schritt A3 wird dann diejenige Beschreibung eines Datenpunktes bestimmt, die den Vorhersagefehler maximiert. Auf Basis dieser Beschreibung wird dann in Schritt A4 ein oder mehrere neue Datenpunkte generiert.

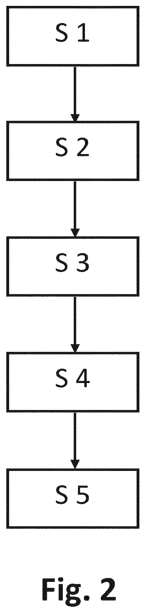

In Fig. 2 ist nun ein Ablaufdiagramm eines erfindungsgemäßen Verfahrens dargestellt. Das erfindungsgemäße Verfahren startet in Schritt S1 mit dem Trainieren eines ersten Prädiktors auf Basis bereits vorhandener annotierter Daten. Die annotierten Daten bestehen dabei aus insbesondere für das Trainieren relevanten Datenpunkten und umfassen vorteilshafterweise auch eine Beschreibung. In Schritt S2 wird dann auf Basis zumindest eines Teils der vorhandenen annotierten Daten ein Vorhersagefehler des ersten Prädiktors für jeden dieser Datenpunkte bestimmt.

Im Schritt S3 wird dann ein zweiter Prädiktor trainiert, um einen erwarteten Vorhersagefehler des ersten Prädiktors und eine Unsicherheit zu bestimmen. Dies wird auf Basis des Vorhersagefehlers der Datenpunkte des ersten Prädiktors gemacht. Vorteilshafterweise wird dazu auch die Beschreibung der Datenpunkte oder eine Beschreibung des Datenraums verwendet.

Im Schritt S4 wird dann durch einen Algorithmus eine Datenbeschreibung bestimmt, die eine Kombination aus erwartetem Vorhersagefehler und Unsicherheit maximiert. Beispielsweise kann die obere Konfidenzschranke (upper confidence bound (UCB)), die die Summe aus erwartetem Vorhersagefehler und mit einer eventuell durch eine Konstante gestreckte oder gestauchte Unsicherheit maximiert, als Maß dazu benutzt werden. Durch eine zum Beispiel zufällige Generierung von Datenbeschreibungen kann somit diejenige Datenbeschreibung ausgewählt werden, die das Maß maximiert.

Im Schritt S5 werden dann neue Daten auf Grund der zuvor ins S4 bestimmten Datenbeschreibung generiert. Die neuen Daten können zum Beispiel zumindest zum Teil einen Bereich des Datenraums beschreiben, bei dem der erste Prädiktor noch große Fehler macht oder der nicht durch den ersten Prädiktor abgedeckt wird.

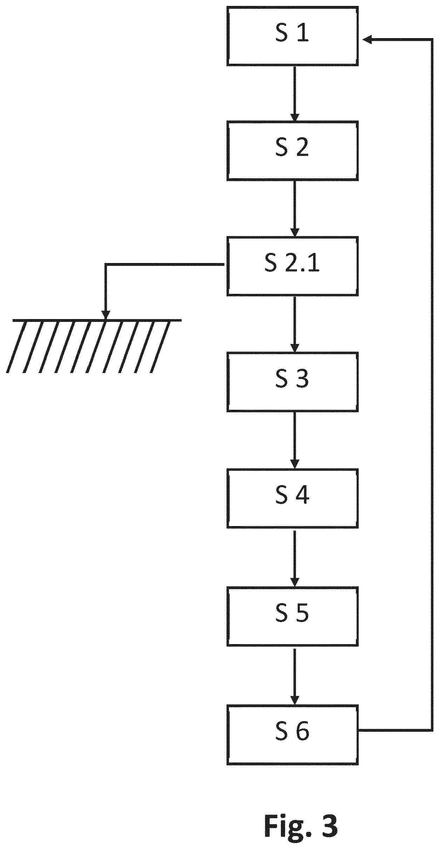

Ein Verfahren zum Trainieren eines Prädiktors mithilfe des erfindungsgemäßen Verfahrens zur Generierung von Daten umfasst die Schritte S1 bis S5 sowie einen Schritt S2.1 und einen Schritt S6 und ist in Figur 3 in Form eines Ablaufdiagramms dargestellt.

Im Schritt S2.1 wird überprüft, ob die Qualität des ersten Prädiktors an dieser Stelle für die gewünschte Anwendung ausreichend oder maximal ist. Ist dies der Fall, kann das Verfahren nun hier beendet werden, ansonsten wird das Verfahren im Schritt S3 fortgeführt. Dabei wird die Qualität des Prädiktors an dieser Stelle mithilfe eines geeigneten Maßes oder einer anderen geeigneten Rechenvorschrift bestimmt. Zum Beispiel kann die Qualität des ersten Prädiktors aus dem arithmetischen Mittel der Vorhersagefehler der einzelnen Datenpunkte generiert werden. Die Entscheidung, wie hoch die Qualität des ersten Prädiktors sein soll bzw. muss, ist anwendungsspezifisch. So werden zum Beispiel bei sicherheitsrelevanten Anwendungen oft Fehlerwahrscheinlichkeiten von unter 1% benötigt, bei anderen Anwendungen kann man die Folgen (z.B. erhöhte Kosten) durch einen Schätzer abschätzen und einen Grenzwert bestimmen lassen, bis zu diesem die Qualität ausreichen ist.

Im Schritt S6 werden die in S5 generierten oder gesammelten Daten annotiert und zu den bereits vorhandenen annotierten Daten hinzugefügt. Dann wird das Verfahren wieder bei Schritt S1 fortgeführt.

Das erfindungsgemäße Verfahren kann zum Beispiel dazu genutzt werden, Daten für einen Prädiktor zur Vorhersage der Leistung eines Motors basierend auf Motor-Parametern zu generieren, um einen solchen Prädiktor zu trainieren. Dazu werden als Basis annotierte Daten, die Parameter des Motors und gemessene Leistungsdaten umfassen, verwendet (S1 in Fig. 2). Die Bestimmung des Vorhersagefehlers (S2 in Fig. 2) umfasst dabei den Unterschied zwischen vorhergesagten Leistungen und real gemessenen Ergebnissen.

Für das Trainieren des Prädiktors wird jetzt überprüft, ob der benötigte Vorhersagefehler bereits erreicht ist und wenn ja, wird das Trainings-Verfahren an dieser Stelle beendet (S2.1 in Fig. 3). Ansonsten wird der zweite Prädiktor, der die Unsicherheiten abbilden kann, trainiert (S3 in Fig.2). Der zweite Prädiktor wird zur Vorhersage des erwarteten Leistungsunterschieds auf Basis der Motor Parameter benutzt. Der Datenraum kann dabei verschiedene mögliche Regionen, insbesondere das komplette Spektrum, der Motor Parameter und die möglichen Leistungswerte umfassen.

Anschließend wird die Datenbeschreibung, die die maximierenden Motor Parameter bezüglich des zweiten Prädiktors umfasst, bestimmt (S4 in Fig. 2). Das Generieren der neuen Daten aufgrund der bestimmten Datenbeschreibung (S5 in Fig. 2) kann hier zum Beispiel eine neue Evaluation der gegebenen Motor Parameter, insbesondere weitere Leistungsmessungen, zum Beispiel auf einem Motorprüfstand, umfassen. Zum Trainieren des Prädiktors werden die neuen Daten dann gegebenenfalls annotiert und zu den bereits vorhandenen Daten hinzugefügt (S6 in Fig. 3) und das Trainings-Verfahren wird mit dem Trainieren des ersten Prädiktors wieder auf Basis der vorhandenen Daten, die jetzt die ursprünglich vorhandenen Daten und die neuen Daten umfassen, fortgesetzt. Damit kann das Verfahren benutzt werden, um einen Prädiktor für ein motorgetriebenes Fahrzeug zu generieren, der die Motorleistung besonders effizient oder genau aus anderen Motor Parametern bestimmt. Dieser kann in einem Leistungsmesstand oder in einem Fahrzeug eingesetzt werden und vereinfacht und optimiert die Leistungsbestimmung.

Das erfindungsgemäße Verfahren kann auch dazu genutzt werden, Daten für einen Prädiktor zu generieren, der auf Bildern von Platinen fehlerhafte Positionen finden kann, und um einen solchen Prädiktor zu trainieren. Dabei werden annotierte Bilder von bekannten Fehlern bzw. fehlerhaften Platinen als Daten verwendet. Der Vorhersagefehler des ersten Prädiktors kann dann zum Beispiel eine Positionsabweichung von vorhergesagten Fehlern und bekannten Fehlern auf der Platine sein. Der zweite Prädiktor kann dann trainiert werden, um zu erwartende Positionsabweichungen von Fehlern auf Basis von Platinenbeschreibungen vorherzusagen. Dann wird die maximierende Platinenbeschreibung ausgewählt und neue Daten generiert. Dies kann zum Beispiel das Erzeugen einer oder mehrerer bewusst fehlerhaften Platinen mit verschiedenen Fehlern und Fehlerpositionen umfassen, die die Platinenbeschreibung erfüllen. Der Prädiktor kann Beispielsweise in einem Inspektionsgerät eingesetzt werden, das Platinen nach oder während eines Produktionsprozesses auf Fehler überprüft. Dazu kann das Inspektionsgerät mit einem Datenträger, auf dem zumindest der Prädiktor, vorteilshafterweise aber auch eines der erfindungsgemäßen Computerprogramme, um das erfindungsgemäße Verfahren zur Generierung von Daten oder zum Trainieren eines Prädiktors auszuführen, und insbesondere auch die Daten, die zum Trainieren des Prädiktors verwendet werden, gespeichert ist, einer Recheneinheit, die den Prädiktor, das Trainieren des Prädiktors und das Generieren von Daten ausführen kann, sowie einer Kamera zur Datenaufnahme ausgestattet sein. Das Inspektionsgerät kann eine Kommunikationseinheit zur drahtgebundenen oder drahtlosen Kommunikation umfassen und auch Teil einer vernetzten Struktur, insbesondere einer Client-Server-, Master-Slave-, Cloud-, Internet-Of-Things-Architektur sein, so dass der Prädiktor, die Computerprogramme und /oder die Daten zumindest nicht dauerhaft lokal auf dem Inspektionsgerät vorhanden sein müssen.

Die Recheneinheit kann das Inspektionsgerät und insbesondere die Kamera zu steuern. Die Recheneinheit kann insbesondere auch dazu geeignet sein, aufgrund von insbesondere neuen Daten, die auch von der Kamera aufgenommen werden können, das erfindungsgemäße Verfahren zum Generieren von Daten und das Trainieren des Prädiktors durchzuführen.

Das Inspektionsgerät, der Prädiktor, das Verfahren zur Generierung von Daten und das Verfahren zum Trainieren des Prädiktors können auch für andere Produkte und Produktionsprozesse eingesetzt werden, insbesondere für solche, die eine niedrige Fehlerrate benötigen und/oder die sich adaptiv und flexibel, und insbesondere auch schnell, auf neue und sich verändernde Parameter oder Fehler einzustellen. Dies ist insbesondere auch im Bereich der Optikproduktion, der Medizintechnik, der Pharmaproduktion und der Chipherstellung der Fall. So kann ein solches Inspektionsgerät auch in dem oben beschriebenen Leistungsmessstand bzw. Fahrzeug insbesondere zur Leistungsmessung des Motors eingesetzt werden sowie für die Gesichtserkennung in einem Fahrzeug.

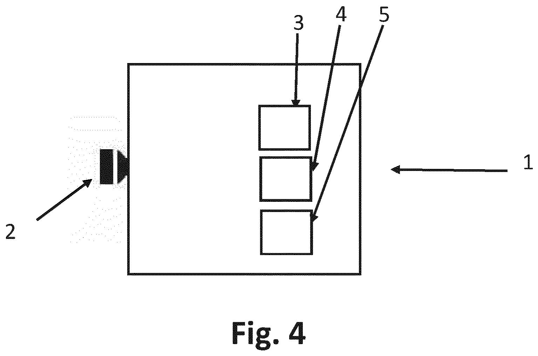

Solche ein Inspektionsgerät, das auch ein erfindungsgemäßes Inspektionsgerät sein kann, ist in Figur 4 schematisch dargestellt. Dabei umfasst das Inspektionsgerät 1 eine Sensoreinrichtung, hier ausgebildet als Kamera 2, eine Recheneinheit 3 und ein Datenträger 4. Außerdem kann sie eine Kommunikationseinrichtung 5 umfassen.

Dadurch, dass durch das Verfahren zur Generierung von Daten Daten gezielter generiert werden können, um den Datenraum möglichst optimal zu beschreiben, können auch Systeme mit weniger Hardwareressourcen dafür geeignet sein, die Verfahren auszuführen.

Das erfindungsgemäße Verfahren kann auch dazu eingesetzt werden, Daten für eine Gesichtserkennung zu generieren und einen Prädiktor für die Gesichtserkennung zu trainieren, insbesondere für eine Gesichtserkennung in einem Fahrzeug. Dabei werden Datenpunkte mit einer relevanten Annotation, z.B. der Position des Gesichtes, sowie einer Beschreibung, umfassend z.B. Lichtverhältnisse, Fahrzeugtyp, Personentyp und Accessoires, zur Verfügung gestellt. Mit einer Teilmenge der Datenpunkte wird nun der erste Prädiktor trainiert und die verbleibenden Datenpunkte werden dazu benutzt, um die Abweichung zwischen der Vorhersage und der Annotation zu bestimmen. So wird für die Bestimmung der Gesichtsposition dann auf den verbleibenden Datenpunkten die Abweichung zwischen vorhergesagter und annotierter Gesichtsposition bestimmt.

Durch die Beschreibung der Datenpunkte sowie der Abweichung der Vorhersage und Annotation wird nun der zweite Prädiktor trainiert, um auf Basis der Beschreibung die Abweichung zwischen Vorhersage und Annotation mit einer gewissen Unsicherheit vorherzusagen. Der zweite Prädiktor kann zum Beispiel einen Gaussprozess umfassen, der einen solchen Vorhersagewert und eine Unsicherheit, zum Beispiel in Form eines Vertrauensintervalls, bestimmt. Danach werden nun (zufällige) Beschreibungen anhand der möglichen Werte der Beschreibung generiert. Für diese wird der erwartete Vorhersagefehler und die Unsicherheit durch den zweiten Prädiktor bestimmt und diejenigen ausgewählt, die ein Maximum bzw. hohe Werte aus einer Kombination von Vorhersagefehler und Unsicherheit liefern. Basierend auf den ausgewählten Beschreibungen werden nun ein oder mehrere Datenpunkte generiert, die diesen Beschreibungen entsprechen. Zum Beispiel können mithilfe einer Rendering Software Bilder von Gesichtern erstellt werden, die diese Beschreibungen erfüllen. Bei auf solch eine Weise generierten Bildern ist die Annotation vorteilhafterweise besonders einfach zu realisieren. Die annotierten Datenpunkte können dann zu den Datenpunkten hinzugefügt und der erste Prädiktor erneut trainiert werden.

Das Ergebnis ist ein Prädiktor zur Bestimmung von Gesichtsposition, bei dem auf Grund des vorgestellten Verfahrens die zu erwartende Vorhersagequalität bei neuen Bildern maximiert ist. Zudem ist durch das Verfahren die benötige Anzahl von Datenpunkten (Bilder) minimiert worden. In gleicher Weise kann auch der Prädiktor oder andere Prädiktoren dazu trainiert werden, Mimik und andere Formen der Gesichtserkennung in einer verbesserten Art und Weise durchzuführen.

Insbesondere kann das Verfahren zur Generierung von Daten, das Verfahren zum Trainieren eines Prädiktors und der Prädiktor selbst zur Gesichtserkennung in einem Fahrzeug eingesetzt werden. Das Fahrzeug kann dabei zumindest eine Kamera oder einen anderen Sensor umfassen, um neue Daten zu generieren. Das Fahrzeug kann auch eine Recheneinheit umfassen, um insbesondere auch aufgrund von insbesondere neuen Daten, die auch von der Kamera oder dem Sensor aufgenommen werden können, das erfindungsgemäße Verfahren zum Generieren von Daten, das Trainieren des Prädiktors und den Prädiktor auszuführen. Das Fahrzeug kann auch einen Datenträger umfassen, auf dem Daten zum Trainieren eines Prädiktors und Computerprogramme zum Ausführen der Verfahren zur Generierung von Daten, zum Trainieren des Prädiktors und des Prädiktors gespeichert sind.

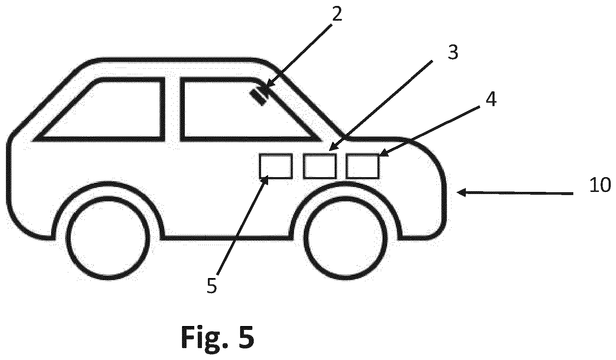

Solch ein Fahrzeug, das insbesondere auch ein erfindungsgemäßes Fahrzeug sein kann, ist in Fig. 5 dargestellt. Das Fahrzeug 1 umfasst dabei zumindest einen Sensor, hier in Form von Kamera 2 ausgebildet, eine Recheneinheit 3 und einen Datenträger 4. Außerdem kann das Fahrzeug auch noch eine Kommunikationseinheit 5 umfassen. Dabei können Kamera 2, Recheneinheit 3, Datenträger 4 und/oder Kommunikationseinheit 5 auch gemeinsam in ein oder mehreren Einrichtungen angeordnet sein. So kann zum Beispiel die Recheneinheit 3, der Datenträger 4 und/oder die Kommunikationseinrichtung 5 im Gehäuse der Kamera 2 angeordnet sein.

Im Fahrzeug werden die hier vorgestellten Verfahren erfindungsgemäß auch für andere Vorrichtungen, die mit trainierten Algorithmen und Datenauswertung funktionieren und verbessert werden können, genutzt. Insbesondere kann dies bei den sich schnell ändernden Gegebenheiten und der Menge an Daten, die bei der Nutzung eines Fahrzeugs, insbesondere eines autonomen Fahrzeugs, anfallen, von Vorteil sein.

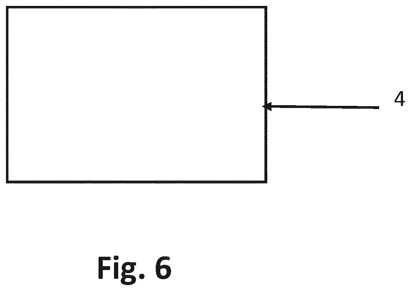

In Figur 6 ist schematisch ein erfindungsgemäßer Datenträger 4 dargestellt. Auf dem Datenträger 4 kann zumindest eines der erfindungsgemäßen Computerprogramme, um das erfindungsgemäße Verfahren zur Generierung von Daten oder zum Trainieren eines Prädiktors auszuführen, insbesondere aber auch die Daten, die zum Trainieren des Prädiktors verwendet werden, und der Prädiktor selbst, gespeichert sein.

### Bezugszeichenliste

- A1 - A5: Verfahrensschritt
- S1 - S6, S2.1: Verfahrensschritt
- 1: Inspektionsgerät
- 2: Kamera
- 3: Recheneinheit
- 4: Datenträger
- 5: Kommunikationseinheit
- 10: Fahrzeug

## Patentansprüche

1. Verfahren zum Trainieren eines ersten Prädiktors zur Gesichtserkennung in einem Fahrzeug und/oder zur Vorhersage der Leistung eines Motors, wobei Daten basierend auf bereits vorhandenen Fahrzeug Daten generiert werden, wobei die bereits vorhandenen Fahrzeug Daten einzelne annotierte Datenpunkte aufweisen, wobei das Verfahren aufweist:
- Trainieren (S1) eines ersten Prädiktors auf Basis der bereits vorhandenen Daten;
- Bestimmen (S2) eines Vorhersagefehler des ersten Prädiktors für jeden Datenpunkt;
- Trainieren (S3) eines zweiten Prädiktors auf Basis des Vorhersagefehlers der Datenpunkte des ersten Prädiktors, um einen erwarteten Vorhersagefehler des ersten Prädiktors und eine Unsicherheit zu bestimmen;
- Bestimmen (S4) einer Datenbeschreibung, die eine Kombination aus erwartetem Vorhersagefehler und Unsicherheit maximiert; und
- Generieren (S5) von neuen Daten auf Grund der zuvor bestimmten Datenbeschreibung;
- Hinzufügen (S6) der generierten neuen Daten zu den bereits vorhandenen Daten; und
- Trainieren des ersten Prädiktors mit diesen Daten.

2. Das Verfahren nach Anspruch 1, weiterhin aufweisend:
- Überprüfen (S2.1), ob eine vorher bestimmte Qualität des ersten Prädiktors erreicht ist; und
- Annotieren und hinzufügen (S6) der neuen Daten zu den bereits vorhandenen Daten.

3. Computerprogramm umfassend Befehle, die bewirken, dass ein Rechnersystem das Verfahren nach einem der Ansprüche 1 oder 2 ausführt.

4. Datenträger, auf dem das Computerprogramm nach Anspruch 3 zum Ausführen des Verfahrens nach einem der Ansprüche 1 oder 2 gespeichert ist.

5. Inspektionsgerät (1) umfassend eine Sensoreinrichtung (2), eine Recheneinheit (3) und einen Datenträger (4), dass das Verfahren zum Trainieren eines Prädiktors nach Anspruch 1 oder 2 ausführt.

6. Inspektionsgerät nach Anspruch 5, umfassend eine Kommunikationseinrichtung (5).

7. Verfahren zum Trainieren eines ersten Prädiktors zur Erkennung von fehlerhaften Positionen auf Bildern von Platinen, wobei Daten basierend auf bereits vorhandenen Platinen Daten generiert werden, wobei die bereits vorhandenen Platinen Daten einzelne annotierte Datenpunkte aufweisen, wobei das Verfahren aufweist:
- Trainieren (S1) eines ersten Prädiktors auf Basis der bereits vorhandenen Daten;
- Bestimmen (S2) eines Vorhersagefehler des ersten Prädiktors für jeden Datenpunkt;
- Trainieren (S3) eines zweiten Prädiktors auf Basis des Vorhersagefehlers der Datenpunkte des ersten Prädiktors, um einen erwarteten Vorhersagefehler des ersten Prädiktors und eine Unsicherheit zu bestimmen;
- Bestimmen (S4) einer Datenbeschreibung, die eine Kombination aus erwartetem Vorhersagefehler und Unsicherheit maximiert; und
- Generieren (S5) von neuen Daten auf Grund der zuvor bestimmten Datenbeschreibung;
- Hinzufügen (S6) der generierten neuen Daten zu den bereits vorhandenen Daten; und
- Trainieren des ersten Prädiktors mit diesen Daten.

8. Verfahren nach Anspruch 7, wobei annotierte Bilder von bekannten Fehlern bzw. fehlerhaften Platinen als bereits vorhandene Daten für das Trainieren des ersten Prädiktors verwendet werden.

9. Verfahren nach Anspruch 8, wobei der Vorhersagefehler des ersten Prädiktors eine Positionsabweichung von vorhergesagten Fehlern und bekannten Fehlern auf der Platine ist.

10. Inspektionsgerät (1) umfassend eine Sensoreinrichtung (2), eine Recheneinheit (3) und einen Datenträger (4), ausgestaltet zur Ausführung des Verfahrens zum Trainieren eines Prädiktors nach einem der Ansprüche 7 bis 9.

## Claims

1. Method for training a first predictor for facial recognition in a vehicle and/or for predicting the power of an engine, wherein data are generated on the basis of already existing vehicle data, wherein the already existing vehicle data have individual annotated data points, wherein the method comprises:
- training (S1) a first predictor on the basis of the already existing data;
- determining (S2) a prediction error of the first predictor for each data point;
- training (S3) a second predictor on the basis of the prediction error of the data points of the first predictor in order to determine an expected prediction error of the first predictor and an uncertainty;
- determining (S4) a data description that maximizes a combination of expected prediction error and uncertainty; and
- generating (S5) new data on the basis of the previously determined data description;
- adding (S6) the generated new data to the already existing data; and
- training the first predictor with these data.

2. Method according to Claim 1, furthermore comprising:
- checking (S2.1) whether a previously determined quality of the first predictor has been reached; and
- annotating and adding (S6) the new data to the already existing data.

3. Computer program comprising instructions that cause a computer system to carry out the method according to either of Claims 1 and 2.

4. Data carrier on which the computer program according to Claim 3 for carrying out the method according to either of Claims 1 and 2 is stored.

5. Inspection device (1) comprising a sensor device (2), a computing unit (3) and a data carrier (4), which carries out the method for training a predictor according to Claim 1 or 2.

6. Inspection device according to Claim 5, comprising a communication device (5).

7. Method for training a first predictor for recognizing incorrect positions in images of circuit boards, wherein data are generated on the basis of already existing circuit board data, wherein the already existing circuit board data have individual annotated data points, wherein the method comprises:
- training (S1) a first predictor on the basis of the already existing data;
- determining (S2) a prediction error of the first predictor for each data point;
- training (S3) a second predictor on the basis of the prediction error of the data points of the first predictor in order to determine an expected prediction error of the first predictor and an uncertainty;
- determining (S4) a data description that maximizes a combination of expected prediction error and uncertainty; and
- generating (S5) new data on the basis of the previously determined data description;
- adding (S6) the generated new data to the already existing data; and
- training the first predictor with these data.

8. Method according to Claim 7, wherein annotated images of known errors or faulty circuit boards are used as already existing data for training the first predictor.

9. Method according to Claim 8, wherein the prediction error of the first predictor is a position deviation of predicted errors and known errors on the circuit board.

10. Inspection device (1) comprising a sensor device (2), a computing unit (3) and a data carrier (4), configured to carry out the method for training a predictor according to one of Claims 7 to 9.

## Revendications

1. Procédé d'entraînement d'un premier prédicteur de reconnaissance faciale dans un véhicule et/ou de prédiction de la puissance d'un moteur, des données étant générées sur la base de données de véhicule déjà présentes, les données de véhicule déjà présentes comportant des points de données individuels annotés, le procédé présentant :
- l'entraînement (S1) d'un premier prédicteur sur la base des données déjà présentes ;
- la détermination (S2) d'une erreur de prédiction du premier prédicteur pour chaque point de données ;
- l'entraînement (S3) d'un deuxième prédicteur sur la base de l'erreur de prédiction des points de données du premier prédicteur pour déterminer une erreur de prédiction attendue du premier prédicteur et une incertitude ;
- la détermination (S4) d'une description de données, qui maximise une combinaison d'une erreur de prédiction attendue et d'une incertitude ; et
- la génération (S5) de nouvelles données sur la base de la description de données déterminée préalablement ;
- l'ajout (S6) des nouvelles données générées aux données déjà présentes ; et
- l'entraînement du premier prédicteur avec lesdites données.

2. Procédé selon la revendication 1, présentant par ailleurs :
- la vérification (S2.1) si une qualité déterminée précédemment du premier prédicteur est atteinte ; et
- l'annotation et ajout (S6) des nouvelles données aux données déjà présentes.

3. Programme informatique comprenant des instructions qui entraînent l'exécution par un système informatique du procédé selon l'une des revendications 1 ou 2.

4. Support de données, sur lequel le programme informatique selon la revendication 3 est stocké pour exécuter le procédé selon l'une des revendications 1 ou 2.

5. Appareil d'inspection (1) comprenant un dispositif de détection (2), une unité de calcul (3) et un support de données (4), qui exécute le procédé d'entraînement d'un prédicteur selon la revendication 1 ou 2.

6. Appareil d'inspection selon la revendication 5, comprenant un dispositif de communication (5).

7. Procédé d'entraînement d'un premier prédicteur de reconnaissance de positions erronées sur des images de platines, des données étant générées sur la base de données de platine déjà présentes, les données de platine déjà présentes comportant des points de données individuels annotés, le procédé présentant :
- l'entraînement (S1) d'un premier prédicteur sur la base des données déjà présentes ;
- la détermination (S2) d'une erreur de prédiction du premier prédicteur pour chaque point de données ;
- l'entraînement (S3) d'un deuxième prédicteur sur la base de l'erreur de prédiction des points de données du premier prédicteur pour déterminer une erreur de prédiction attendue du premier prédicteur et une incertitude ;
- la détermination (S4) d'une description de données, qui maximise une combinaison d'une erreur de prédiction attendue et d'une incertitude ; et
- la génération (S5) de nouvelles données sur la base de la description de données déterminée préalablement ;
- l'ajout (S6) des nouvelles données générées aux données déjà présentes ; et
- l'entraînement du premier prédicteur avec lesdites données.

8. Procédé selon la revendication 7, des images annotées d'erreurs connues ou de platines erronées étant utilisées comme des données déjà présentes pour l'entraînement du premier prédicteur.

9. Procédé selon la revendication 8, l'erreur de prédiction du premier prédicteur étant un écart de position d'erreurs prédites et d'erreurs connues sur la platine.

10. Appareil d'inspection (1) comprenant un dispositif de détection (2), une unité de calcul (3) et un support de données (4), configuré pour exécuter le procédé d'entraînement d'un prédicteur selon l'une des revendications 7 à 9.
